# EUROPEAN PATENT APPLICATION

(11) **EP 4 825 594 A1**
(43) Date of publication of application: **21.10.2026**
(21) Application number: 26171954.6
(22) Date of filing: 13.04.2026
(51) Int. Cl.: B41J 2/175, B41J 2/18

(54) **LIQUID EJECTING APPARATUS AND INK-JET RECORDING APPARATUS**

(30) Priority: 17.04.2025 JP 2025067925
(71) Applicant: KYOCERA Document Solutions Inc., Osaka-shi, Osaka 540-8585 (JP)
(72) Inventor: Nishida, Nanako, Osaka-shi, 540-8585 (JP); Yoneda, Shogo, Osaka-shi, 540-8585 (JP); Ishida, Hideki, Osaka-shi, 540-8585 (JP); Tsuboi, Shun, Osaka-shi, 540-8585 (JP); Imanaka, Koichi, Osaka-shi, 540-8585 (JP); Satake, Kenichi, Osaka-shi, 540-8585 (JP)
(74) Representative: Plougmann Vingtoft a/s

(57) **Abstract**

A primary chamber communicates with an inflow path. A secondary chamber communicates with an outflow path and includes an opening. A partition separates the primary chamber from the secondary chamber. A communication hole is formed in the partition. A cover member covers the opening and includes a diaphragm that contracts and expands according to a change in pressure in the secondary chamber. A valve opens and closes the communication hole according to the contraction and expansion of the diaphragm. An outflow path entrance corresponding to one of ends of the outflow path that enables the outflow path to communicate with the secondary chamber is formed in a top portion of an inner surface of the secondary chamber.

## Description

### BACKGROUND

The present disclosure relates to a liquid ejecting apparatus and an ink-jet recording apparatus.

The liquid ejecting apparatus and the ink-jet recording apparatus each include a pressure-regulating-valve apparatus arranged in a supply path for liquid.

The ink-jet recording apparatus includes an ink ejecting apparatus that ejects ink drops from an ink-jet head onto a sheet to form an image on the sheet. The ink ejecting apparatus is an example of a liquid ejecting apparatus that ejects liquid drops. The ink-jet head is an example of a liquid ejecting head.

In the liquid ejecting apparatus, a pressure-regulating-valve apparatus may be arranged in a supply path that connects a liquid storage and the liquid ejecting head.

The pressure-regulating-valve apparatus includes a primary chamber into which the liquid flows, a secondary chamber that communicates with the primary chamber through a communication hole, a valve that opens and closes the communication hole, and a cover portion that covers an opening included in the secondary chamber.

The pressure-regulating-valve apparatus further includes an inflow path that communicates with the supply path and with the primary chamber, and an outflow path that communicates with the secondary chamber and with the supply path.

The cover portion includes a diaphragm. The diaphragm contracts and expands according to a change in pressure in the secondary chamber, and the valve opens and closes the communication hole according to the contraction and expansion of the diaphragm. The valve opens the communication hole to cause the liquid to flow into the liquid ejecting head from the liquid storage via the inflow path, the primary chamber, the secondary chamber, and the outflow path.

For example, it is known that an opening of the outflow path on the side of the secondary chamber is formed at a lower end of the secondary chamber.

### SUMMARY

A liquid ejecting apparatus according to an aspect of the present disclosure includes a supply path, a liquid ejecting head, and a pressure-regulating-valve apparatus. The supply path is connected to a liquid storage that stores therein liquid. The liquid ejecting head is connected to the supply path and includes a plurality of nozzles. The liquid ejecting head is supplied with the liquid from the liquid storage through the supply path, and ejects liquid drops from each of the plurality of nozzles. The pressure-regulating-valve apparatus is arranged in the supply path, and temporarily switches from a certain state to another state according to a change in pressure caused in the supply path due to the ink drops being ejected by the liquid ejecting head. The supply path is shut off in the certain state, and the shutoff of the supply path is canceled in the other state. The pressure-regulating-valve apparatus includes an inflow path, a primary chamber, an outflow path, a secondary chamber, a partition, a cover member, and a valve. The inflow path is a flow path for the liquid incoming from upstream of the supply path. The primary chamber communicates with the inflow path. The outflow path is a flow path for the liquid going out to downstream of the supply path. The secondary chamber communicates with the outflow path and includes an opening. The partition separates the primary chamber from the secondary chamber. A communication hole that communicates with the primary chamber and with the secondary chamber is formed in the partition. The cover member covers the opening and includes a diaphragm that contracts and expands according to a change in pressure in the secondary chamber. The valve opens and closes the communication hole according to the contraction and expansion of the diaphragm. An outflow path entrance corresponding to one of ends of the outflow path that enables the outflow path to communicate with the secondary chamber is formed in a top portion of an inner surface of the secondary chamber.

An ink-jet recording apparatus according to another aspect of the present disclosure includes a sheet transportation apparatus that transports a sheet, and the liquid ejecting apparatus ejecting ink drops onto the transported sheet to form an image on the sheet.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 illustrates a configuration of an ink-jet recording apparatus according to an embodiment;
Fig. 2 illustrates the ink-jet recording apparatus at the time of performing an ink expelling process;
Fig. 3 illustrates configurations of an ink supplying apparatus, an ink-jet head, and an ink expelling apparatus that are included in the ink-jet recording apparatus according to the embodiment;
Fig. 4 is a cross-sectional view of a pressure-regulating-valve apparatus in a closed state in the ink-jet recording apparatus according to the embodiment;
Fig. 5 is a cross-sectional view of the pressure-regulating-valve apparatus in an open state in the ink-jet recording apparatus according to the embodiment;
Fig. 6 is a front view of a body of the pressure-regulating-valve apparatus in the ink-jet recording apparatus according to the embodiment;
Fig. 7 is a cross-sectional view of a pressure-regulating-valve apparatus in an ink ejecting apparatus according to a first modification;
Fig. 8 is a cross-sectional view of a body of the pressure-regulating-valve apparatus in the ink ejecting apparatus according to the first modification;
Fig. 9 is a cross-sectional view of a pressure-regulating-valve apparatus in an ink ejecting apparatus according to a second modification; and
Fig. 10 is a cross-sectional view of a pressure-regulating-valve apparatus in an ink ejecting apparatus according to a third modification.

### DETAILED DESCRIPTION

Embodiments of the present disclosure will now be described below with reference to the drawings. Note that the following embodiments are merely examples in which the present disclosure is embodied, and are not intended to limit the scope of the present disclosure.

### Configuration of Ink-Jet Recording Apparatus 10

An ink-jet recording apparatus 10 according to an embodiment is an image forming apparatus that can perform a printing process by ink-jetting. The printing process is a process of forming an image on a sheet 9. The sheet 9 is an image formation medium in the form of a sheet, such as paper or a resin film.

Note that the ink-jet recording apparatus 10 may be a facsimile apparatus, copying machine, or multifunctional device that can perform the printing process by ink-jetting.

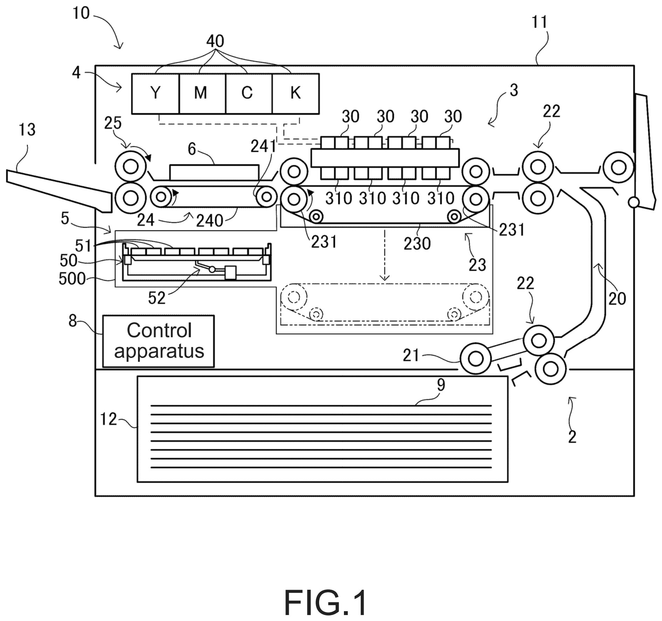

As illustrated in Fig. 1, the ink-jet recording apparatus 10 includes, for example, a sheet accommodating portion 12, a sheet transportation apparatus 2, an ink ejecting apparatus 3, a drying apparatus 6, and a control apparatus 8. The sheet transportation apparatus 2, the ink ejecting apparatus 3, the drying apparatus 6, and the control apparatus 8 are accommodated in a housing 11 that is included in a body.

The ink ejecting apparatus 3 includes an ink supplying apparatus 4, a plurality of ink-jet heads 30, and an ink expelling apparatus 5. The ink supplying apparatus 4 supplies inks to the plurality of ink-jet heads 30.

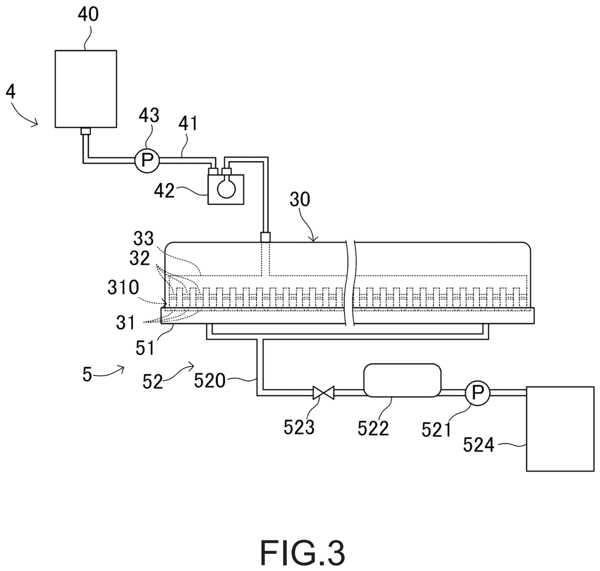

Each ink-jet head 30 includes a nozzle group 310 including a plurality of nozzles 31 (refer to Figs. 1 and 3). Each of the plurality of nozzles 31 ejects ink drops. The ink expelling apparatus 5 performs an ink expelling process to expel inks from the plurality of ink-jet heads 30.

The sheet accommodating portion 12 can accommodate therein a plurality of sheets 9. The sheet transportation apparatus 2 transports, along a sheet transportation path 20, each sheet 9 accommodated in the sheet accommodating portion 12, and discharges the sheet 9 into a discharge tray 13 from the sheet transportation path 20.

The sheet transportation apparatus 2 includes, for example, a sheet feeding mechanism 21, a plurality of transportation roller pairs 22, a primary transportation unit 23, an output-side transportation unit 24, and a discharge roller pair 25. The sheet feeding mechanism 21 feeds each sheet 9 to the sheet transportation path 20 from the sheet accommodating portion 12.

The plurality of transportation roller pairs 22 takes over the transportation of the sheet 9 from the sheet feeding mechanism 21, and transports the sheet 9 toward the primary transportation unit 23.

The primary transportation unit 23 is arranged below the plurality of ink-jet heads 30. The primary transportation unit 23 transports each sheet 9 along the nozzle groups 310 of the plurality of ink-jet heads 30.

In the primary transportation unit 23, a plurality of suspension rollers 231 supports and rotates an endless primary transportation belt 230. This causes the primary transportation unit 23 to transport each sheet 9 on an upper surface of the primary transportation belt 230, and further feeds the sheet 9 to the output-side transportation unit 24. A portion between the upper surface of the primary transportation belt 230 and the plurality of ink-jet heads 30 forms a portion of the sheet transportation path 20.

The output-side transportation unit 24 is arranged downstream of the primary transportation unit 23 in a sheet-transportation direction, where the primary transportation unit 23 is situated at a reference position.

In the output-side transportation unit 24, a plurality of suspension rollers 241 supports and rotates an endless output-side transportation belt 240. This causes the output-side transportation unit 24 to transport each sheet 9 on an upper surface of the output-side transportation belt 240, and further feeds the sheet 9 to the discharge roller pair 25, where an image is formed on the sheet 9.

The drying apparatus 6 blows heated air to each sheet 9 transported by the output-side transportation unit 24, such that ink on the sheet 9 is dried. The discharge roller pair 25 discharges, into the discharge tray 13, each sheet 9 on which an image is formed.

The ink supplying apparatus 4 includes a plurality of ink containers 40 each storing therein ink. Each ink container 40 is an example of a liquid storage that stores therein liquid. The ink is an example of liquid.

The ink supplying apparatus 4 supplies ink to each of the plurality of ink-jet heads 30 from a corresponding one of the plurality of ink containers 40. The ink containers 40 of the plurality of ink containers 40 respectively store therein inks of different colors. The ink-jet heads 30 of the plurality of ink-jet heads 30 respectively eject inks of different colors. In the present embodiment, examples of the color of the ink include four colors that are black, cyan, magenta, and yellow.

Each ink-jet head 30 performs an ink ejecting process to eject ink drops from each of the plurality of nozzles 31. The plurality of ink-jet heads 30 ejects ink drops onto each sheet 9 transported by the primary transportation unit 23, such that an image is formed on the sheet 9.

The ink ejecting process is an example of a liquid ejecting process to eject liquid drops. Each ink-jet head 30 is an example of a liquid ejecting head that performs the liquid ejecting process. The ink ejecting apparatus 3 is an example of a liquid ejecting apparatus that includes the liquid ejecting head.

The ink expelling process is an example of a liquid expelling process to expel liquid from the liquid ejecting head. The ink expelling apparatus 5 is an example of a liquid expelling apparatus that performs the liquid expelling process.

The control apparatus 8 controls the sheet transportation apparatus 2, the ink ejecting apparatus 3, and the drying apparatus 6.

The control apparatus 8 performs control on the sheet transportation apparatus 2 to control transportation of each sheet 9. Further, the control apparatus 8 causes the plurality of ink-jet heads 30 to perform the ink ejecting process in synchronization with the transportation of the sheet 9.

Further, the control apparatus 8 performs control on the ink expelling apparatus 5 to cause the ink expelling apparatus 5 to perform the ink expelling process.

Each ink-jet head 30 includes an introduction path 33 that communicates with the plurality of nozzles 31 (refer to Fig. 3). Ink supplied by the ink supplying apparatus 4 is supplied to the plurality of nozzles 31 through the introduction path 33.

Each ink-jet head 30 further includes a plurality of piezoelectric elements 32 each corresponding to a corresponding one of the plurality of nozzles 31 (refer to Fig. 3). Each piezoelectric element 32 vibrates by being supplied with an ejection drive signal by the control apparatus 8. Each piezoelectric element 32 vibrates to apply pressure to ink, and jets the ink from a corresponding one of the nozzles 31.

When air bubbles form in each ink-jet head 30 in the ink ejecting apparatus 3, a failure in ejecting ink occurs easily. The ink ejecting apparatus 3 includes the ink expelling apparatus 5 in order to expel the air bubbles from each ink-jet head 30 along with ink.

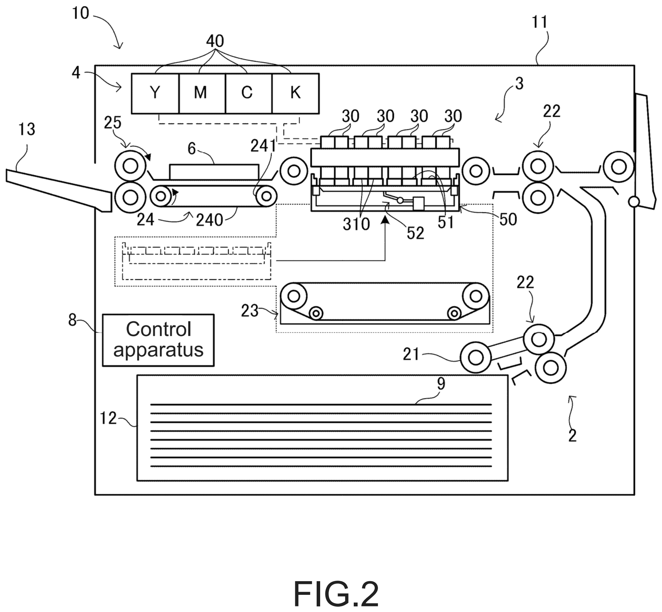

The ink expelling apparatus 5 includes a cap 51 that can cover the nozzle group 310 of each of the plurality of ink-jet heads 30 (refer to Figs. 2 and 3). Further, the ink expelling apparatus 5 includes a suction apparatus 52 that sucks in air from the cap 51 covering the nozzle group 310 (refer to Figs. 2 and 3). The ink expelling process is a process of expelling ink from each of the plurality of ink-jet heads 30 through the cap 51 by air being sucked in from the cap 51.

The ink expelling process is performed to expel the air bubbles from each ink-jet head 30 along with ink. Further, concurrently with expelling of ink from each ink-jet head 30, new ink is supplied to the ink-jet head 30 by the ink supplying apparatus 4.

When the printing process is performed, the primary transportation unit 23 is supported at the reference position enabling the sheet transportation path 20 to be formed between the primary transportation unit 23 and the plurality of ink-jet heads 30. Fig. 1 illustrates the primary transportation unit 23 situated at the reference position.

The primary transportation unit 23 is supported movably to a transportation retraction position that is more distant from the plurality of ink-jet heads 30 than the reference position. Fig. 2 illustrates the primary transportation unit 23 situated at the transportation retraction position. In the present embodiment, the transportation retraction position is a position situated vertically below the reference position.

### Configuration of Ink Expelling Apparatus 5

The ink expelling apparatus 5 includes a cap unit 50 that includes the caps 51 and a portion of or all of the suction apparatus 52, and a unit moving apparatus 500 that moves the cap unit 50 and the primary transportation unit 23 (refer to Figs. 1 and 2).

The cap unit 50 is supported movably between a cap retraction position and a cap position. Fig. 1 illustrates the cap unit 50 situated at the cap retraction position. Fig. 2 illustrates the cap unit 50 situated at the cap position.

The cap retraction position is a position at which the cap unit 50 does not interfere with the primary transportation unit 23 situated at the reference position. The cap position is a position of the cap unit 50 when the cap 51 covers the nozzle group 310 of each of the plurality of ink-jet heads 30.

In response to a first movement control being performed by the control apparatus 8, the unit moving apparatus 500 moves the primary transportation unit 23 from the reference position to the transportation retraction position, and further moves the cap unit 50 from the cap retraction position to the cap position (refer to Fig. 2).

Further, in response to a second movement control being performed by the control apparatus 8, the unit moving apparatus 500 moves the cap unit 50 from the cap position to the cap retraction position, and further moves the primary transportation unit 23 from the transportation retraction position to the reference position (refer to Fig. 1).

In the present embodiment, the suction apparatus 52 includes an expelling path 520, a suction pump 521, a buffer tank 522, a control valve 523, and a collection tank 524 (refer to Fig. 3).

The expelling path 520 is a tube that communicates with an interior of the cap 51, and with the suction pump 521 and the collection tank 524. For example, the expelling path 520 may be a pipe, a hose, or a combination of a pipe and a hose.

The suction pump 521 is arranged in the expelling path 520 between the cap 51 and the collection tank 524. In the present embodiment, the suction pump 521 is a tube pump. Accordingly, when the suction pump 521 is stopped, shutoff is performed in a portion in which the suction pump 521 is arranged. Note that the same applies to the case in which a diaphragm pump is adopted as the suction pump 521.

The buffer tank 522 is arranged in the expelling path 520 between the cap 51 and the suction pump 521. The buffer tank 522 temporarily stores therein air and ink that flow through the expelling path 520.

The control valve 523 is arranged in the expelling path 520 between the cap 51 and the buffer tank 522. The control valve 523 switches between an expelling-path closed state and an expelling-path open state according to an input control signal. The expelling-path closed state is a state in which the expelling path 520 is shut off. The expelling-path open state is a state in which the shutoff of the expelling path 520 is canceled.

The ink expelling apparatus 5 performs the ink expelling process by a warming-up movement and an expelling movement after the warming-up movement is performed. The warming-up movement is a movement to stop the suction pump 521 after the suction pump 521 operates for a specified period of time when the control valve 523 is in the expelling-path closed state. The expelling movement is a movement to switch the control valve 523 from the expelling-path closed state to the expelling-path open state.

Pressure in the buffer tank 522 is decreased by the ink expelling apparatus 5 performing the warming-up movement. Ink is sucked in from each ink-jet head 30 due to a negative pressure in the buffer tank 522 by the ink expelling apparatus 5 performing the expelling movement.

Ink is expelled from each ink-jet head 30 along with air bubbles by the suction apparatus 52 operating, and new ink that contains no air bubbles is supplied into the ink-jet head 30 by the ink supplying apparatus 4.

### Configuration of Ink Supplying Apparatus 4

The ink supplying apparatus 4 includes a supply path 41 and a pressure-regulating-valve apparatus 42 (refer to Fig. 3). The supply path 41 is connected to each ink container 40 and to a corresponding one of the ink-jet heads 30. The pressure-regulating-valve apparatus 42 is arranged in the supply path 41.

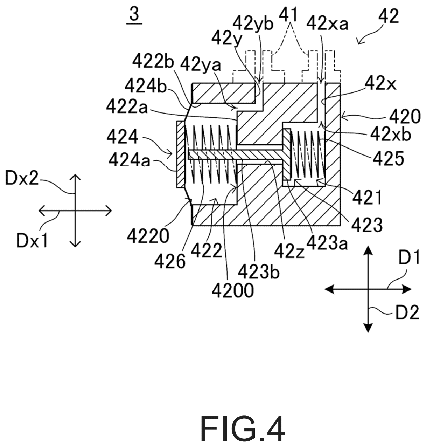

The pressure-regulating-valve apparatus 42 temporarily switches from a supply-path closed state to a supply-path open state according to a change in pressure caused in the supply path 41 due to ink drops being ejected by each ink-jet head 30. The supply-path closed state is a state in which the supply path 41 is shut off using a valve 423 (refer to Fig. 4).

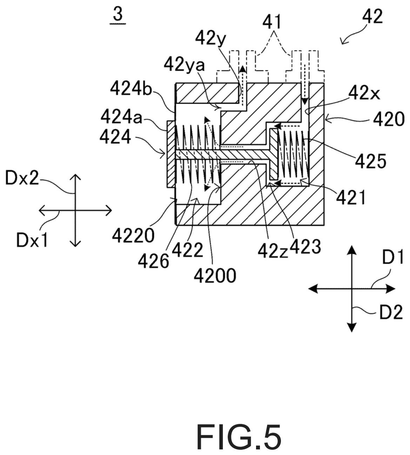

On the other hand, the supply-path open state is a state in which the shutoff of the supply path 41 using the valve 423 is canceled (refer to Fig. 5). When the pressure-regulating-valve apparatus 42 switches to the supply-path open state, ink is replenished in each ink-jet head 30 in response to ink drops being ejected by the ink-jet head 30 (refer to Fig. 5).

In other words, the valve 423 is a member that can shut off the supply path 41. When the pressure-regulating-valve apparatus 42 is in the supply-path open state, each ink-jet head 30 is supplied with ink from a corresponding one of the ink containers 40 through the supply path 41.

The ink supplying apparatus 4 further includes a pressurizing pump 43 that is arranged in the supply path 41 (refer to Fig. 3). The pressurizing pump 43 applies pressure to ink in the supply path 41. The control apparatus 8 operates the pressurizing pump 43 when the printing process is performed. Note that the ink supplying apparatus 4 may include no pressurizing pump 43.

### Configuration of Pressure-Regulating-Valve Apparatus 42

As illustrated in Fig. 4, the pressure-regulating-valve apparatus 42 includes a body 420, the valve 423, a cover member 424, a first spring 425, and a second spring 426.

The body 420 includes a primary chamber 421, a secondary chamber 422, an inflow path 42x, an outflow path 42y, and a partition 4200. For example, the body 420 is a member made of synthetic resin. The cover member 424 includes a pressure receiving plate 424a and a diaphragm 424b.

The inflow path 42x is a flow path for ink incoming from upstream of the supply path 41. The outflow path 42y is a flow path for ink going out to downstream of the supply path 41.

The primary chamber 421 is an ink storing tank that communicates with the inflow path 42x. The secondary chamber 422 is an ink storing tank that communicates with the outflow path 42y. The partition 4200 separates the primary chamber 421 from the secondary chamber 422.

A communication hole 42z that communicates with the primary chamber 421 and with the secondary chamber 422 is formed in the partition 4200. The valve 423 is a member that can open and close the communication hole 42z.

One of ends of the inflow path 42x that enables the inflow path 42x to communicate with the supply path 41 corresponds to an inflow path entrance 42xa (refer to Fig. 4). Another of the ends of the inflow path 42x that enables the inflow path 42x to communicate with the primary chamber 421 corresponds to an inflow path exit 42xb (refer to Fig. 4).

One of ends of the outflow path 42y that enables the outflow path 42y to communicate with the secondary chamber 422 corresponds to an outflow path entrance 42ya (refer to Fig. 4). Another of the ends of the outflow path 42y that enables the outflow path 42y to communicate with the supply path 41 corresponds to an outflow path exit 42yb (refer to Fig. 4).

The valve 423 includes a shielding portion 423a that closes the communication hole 42z, and an axial portion 423b that is arranged to pass through the communication hole 42z. The valve 423 can be moved between a closed position at which the communication hole 42z is closed with the shielding portion 423a, and an open position at which the communication hole 42z is open.

The shielding portion 423a is arranged in the primary chamber 421, and the axial portion 423b extends into the secondary chamber 422 from the shielding portion 423a.

The secondary chamber 422 includes an opening 4220. The opening 4220 is formed on a side of the secondary chamber 422 that is situated opposite to the partition 4200.

The cover member 424 covers the opening 4220 of the secondary chamber 422. The pressure receiving plate 424a covers a portion of the opening 4220, and the diaphragm 424b covers a remaining portion of the opening 4220.

The diaphragm 424b is connected to the pressure receiving plate 424a and to an edge portion of the opening 4220 of the secondary chamber 422. The diaphragm 424b is a member that can contract and expand.

The first spring 425 is arranged in the primary chamber 421, and the second spring 426 is arranged in the secondary chamber 422. The first spring 425 biases the shielding portion 423a to hold the valve 423 at the closed position.

The second spring 426 biases the pressure receiving plate 424a outward from the secondary chamber 422 to hold the pressure receiving plate 424a at a basic position. Each of the first spring 425 and the second spring 426 is an example of a biasing member.

When each ink-jet head 30 performs the ink ejecting process, pressure in the secondary chamber 422 is decreased so that the diaphragm 424b contracts, and the pressure receiving plate 424a resists a biasing force of the second spring 426 to be moved inward of the secondary chamber 422 from the basic position (refer to Fig. 5).

When the pressure receiving plate 424a is moved inward of the secondary chamber 422, the pressure receiving plate 424a resists a biasing force of the first spring 425 to press the axial portion 423b of the valve 423 toward the primary chamber 421 (refer to Fig. 5). As a result, the valve 423 is moved from the closed position to the open position, and the pressure-regulating-valve apparatus 42 switches from the supply-path closed state to the supply-path open state.

In other words, the diaphragm 424b contracts and expands according to a change in pressure in the secondary chamber 422, and the valve 423 opens and closes the communication hole 42z according to the contraction and expansion of the diaphragm 424b.

A state in which the valve 423 closes the communication hole 42z corresponds to the supply-path closed state of the pressure-regulating-valve apparatus 42. A state in which the valve 423 opens the communication hole 42z corresponds to the supply-path open state of the pressure-regulating-valve apparatus 42.

When the pressure-regulating-valve apparatus 42 is in the supply-path open state, ink flows into the primary chamber 421 from upstream of the supply path 41 through the inflow path 42x (refer to Fig. 5). Further, the ink flows into the secondary chamber 422 from the primary chamber 421 through the communication hole 42z, and further flows downstream of the supply path 41 from the secondary chamber 422 through the outflow path 42y (refer to Fig. 5).

On the other hand, when each ink-jet head 30 stops performing the ink ejecting process, the pressure in the secondary chamber 422 is increased so that the diaphragm 424b expands, and the pressure receiving plate 424a returns to the basic position due to the biasing force of the second spring 426. As a result, the valve 423 is moved from the open position to the closed position, and the pressure-regulating-valve apparatus 42 switches from the supply-path open state to the supply-path closed state (refer to Fig. 4).

Further, when the ink expelling process is performed, the pressure-regulating-valve apparatus 42 also switches from the supply-path closed state to the supply-path open state. Thereafter, when the ink expelling process is terminated, the pressure-regulating-valve apparatus 42 switches from the supply-path open state to the supply-path closed state.

Here, when ink is supplied to each ink-jet head 30 for the first time, each of the primary chamber 421 and the secondary chamber 422 in the pressure-regulating-valve apparatus 42 is filled with ink. In this case, air in each of the primary chamber 421 and the secondary chamber 422 is expelled from the plurality of nozzles 31 of each ink-jet head 30 through the supply path 41.

However, depending on a position of the outflow path entrance 42ya, air bubbles may stay in an upper portion of the secondary chamber 422 when the secondary chamber 422 is filled with ink.

When the air bubbles stay in the secondary chamber 422, a change in pressure in the secondary chamber 422 may be absorbed by the air bubbles, and this may prevent the diaphragm 424b from contracting and expanding properly. This may result in a malfunction in the valve 423.

The ink supplying apparatus 4 has a configuration that enables the stay of the air bubbles in the secondary chamber 422 of the pressure-regulating-valve apparatus 42 to be prevented.

In the ink supplying apparatus 4, the outflow path entrance 42ya is formed in a top portion of an inner surface of the secondary chamber 422 (refer to Figs. 4 and 5). The communication hole 42z is formed below the outflow path entrance 42ya.

In each figure, a first direction Dx1 and a second direction Dx2 are directions set on the basis of the pressure-regulating-valve apparatus 42. The first direction Dx1 is a direction in which the primary chamber 421 and the secondary chamber 422 are arranged in a line. The axial portion 423b of the valve 423 is arranged in parallel with the first direction Dx1 of the pressure-regulating-valve apparatus 42.

The second direction Dx2 is a direction that is orthogonal to the first direction Dx1 and along a plane passing through a center of the outflow path entrance 42ya.

In Figs. 4 and 5, the pressure-regulating-valve apparatus 42 is arranged in a position in which the first direction Dx1 extends in parallel with a horizontal direction D1 and the second direction Dx2 extends in parallel with a vertical direction D2.

Note that the pressure-regulating-valve apparatus 42 may be arranged in an inclined position in which the first direction Dx1 and the second direction Dx2 respectively form acute angles with the horizontal direction D1 and the vertical direction D2. When the pressure-regulating-valve apparatus 42 is arranged in the inclined position, the pressure-regulating-valve apparatus 42 is also arranged such that the outflow path entrance 42ya is situated in the top portion of the secondary chamber 422.

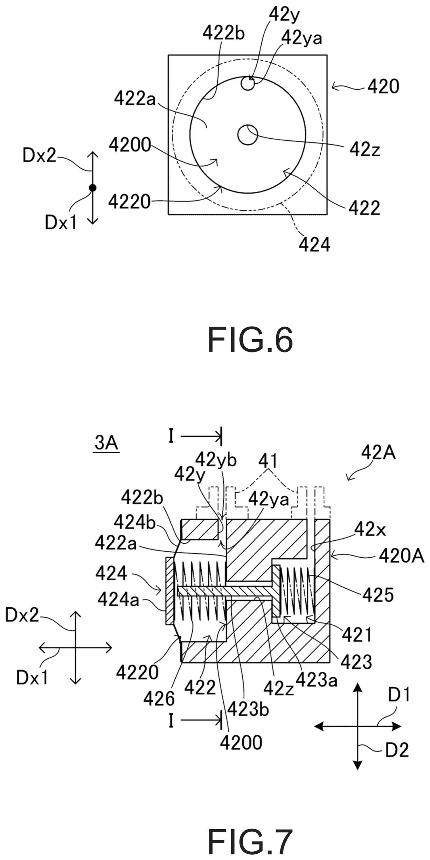

The inner surface of the secondary chamber 422 includes a partition surface 422a and a surrounding surface 422b (refer to Fig. 4). The partition surface 422a corresponds to a surface of the partition 4200 that is situated on the side of the secondary chamber 422. The surrounding surface 422b is a surface that is formed between the opening 4220 and an edge of the partition surface 422a and that surrounds the secondary chamber 422 (refer to Figs. 4 and 6).

In the present embodiment, the partition surface 422a is a flat surface extending in parallel with the second direction Dx2. The surrounding surface 422b is a cylindrical surface extending in parallel with the first direction Dx1 (refer to Fig. 6). Fig. 6 is a front view of the body 420, as viewed in the first direction Dx1.

In the present embodiment, the outflow path entrance 42ya is formed in a portion of the partition surface 422a that is on the surrounding surface 422b (refer to Figs. 4 and 6).

In the present embodiment, the inflow path exit 42xb is formed in a top portion of an inner surface of the primary chamber 421 (refer to Fig. 4).

Further, the inflow path entrance 42xa is formed in an outer upper surface of the body 420 (refer to Fig. 4). In other words, the inflow path 42x is formed from the outer upper surface of the body 420 to the top portion of the inner surface of the primary chamber 421.

Furthermore, the outflow path exit 42yb is formed in the outer upper surface of the body 420 (refer to Fig. 4). In other words, the outflow path 42y is formed from the top portion of the inner surface of the secondary chamber 422 to the outer upper surface of the body 420.

When air bubbles are in the secondary chamber 422, the air bubbles are moved to the top portion in the secondary chamber 422 due to buoyancy. In the present embodiment, air bubbles in the secondary chamber 422 are easily moved to the outflow path entrance 42ya due to buoyancy and a flow of ink.

The adoption of the ink ejecting apparatus 3 makes it possible to prevent air bubbles from staying in the secondary chamber 422.

### First Modification

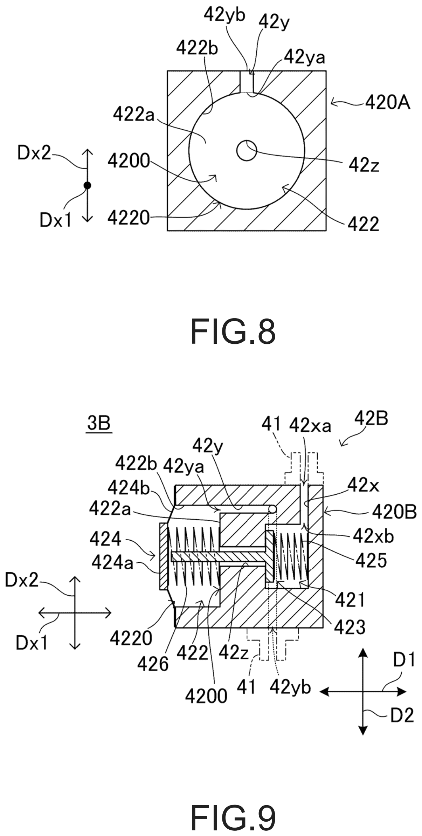

Next, an ink ejecting apparatus 3A according to a first modification that can be applied to the ink-jet recording apparatus 10 is described with reference to Figs. 7 and 8. The ink ejecting apparatus 3A is a modification of the ink ejecting apparatus 3.

Structural elements illustrated in Figs. 7 and 8 that are the same as the structural elements illustrated in Figs. 4 and 5 are denoted by the same reference numerals as the structural elements illustrated in Figs. 4 and 5. A configuration of the ink ejecting apparatus 3A that is different from the configuration of the ink ejecting apparatus 3 is described below.

The ink ejecting apparatus 3A has a configuration in which the pressure-regulating-valve apparatus 42 of the ink ejecting apparatus 3 has been replaced with a pressure-regulating-valve apparatus 42A. The pressure-regulating-valve apparatus 42A has a configuration in which the body 420 of the pressure-regulating-valve apparatus 42 has been replaced with a body 420A.

Fig. 8 is a cross-sectional view of the body 420A in an I-I plane illustrated in Fig. 7. Fig. 8 is a cross-sectional view of the body 420A, as viewed in the first direction Dx1.

In the body 420A, the outflow path entrance 42ya is formed in a portion of the surrounding surface 422b that is on the partition surface 422a in the secondary chamber 422 (refer to Figs. 7 and 8). The ink ejecting apparatus 3A is different from the ink ejecting apparatus 3 in this point.

In the pressure-regulating-valve apparatus 42A, the outflow path 42y is formed in parallel with the second direction Dx2.

In Fig. 7, the pressure-regulating-valve apparatus 42A is arranged in a position in which the first direction Dx1 extends in parallel with the horizontal direction D1 and the second direction Dx2 extends in parallel with the vertical direction D2.

Note that the pressure-regulating-valve apparatus 42A may be arranged in the inclined position in which the first direction Dx1 and the second direction Dx2 respectively form acute angles with the horizontal direction D1 and the vertical direction D2. When the pressure-regulating-valve apparatus 42A is arranged in the inclined position, the pressure-regulating-valve apparatus 42A is also arranged such that the outflow path entrance 42ya is situated in the top portion of the secondary chamber 422.

The adoption of the ink ejecting apparatus 3A also results in obtaining effects similar to the effects provided when the ink ejecting apparatus 3 is adopted.

### Second Modification

Next, an ink ejecting apparatus 3B according to a second modification that can be applied to the ink-jet recording apparatus 10 is described with reference to Fig. 9. The ink ejecting apparatus 3B is a modification of the ink ejecting apparatus 3.

Structural elements illustrated in Fig. 9 that are the same as the structural elements illustrated in Figs. 4 and 5 are denoted by the same reference numerals as the structural elements illustrated in Figs. 4 and 5. A configuration of the ink ejecting apparatus 3B that is different from the configuration of the ink ejecting apparatus 3 is described below.

The ink ejecting apparatus 3B has a configuration in which the pressure-regulating-valve apparatus 42 of the ink ejecting apparatus 3 has been replaced with a pressure-regulating-valve apparatus 42B. The pressure-regulating-valve apparatus 42B has a configuration in which the body 420 of the pressure-regulating-valve apparatus 42 has been replaced with a body 420B.

In this modification, the outflow path exit 42yb is formed in an outer lower surface of the body 420B. In other words, the outflow path 42y of the body 420B is formed from the top portion of the inner surface of the secondary chamber 422 to the outer lower surface of the body 420B. The ink ejecting apparatus 3B is different from the ink ejecting apparatus 3 in this point.

The adoption of the ink ejecting apparatus 3B also results in obtaining effects similar to the effects provided when the ink ejecting apparatus 3 is adopted.

### Third Modification

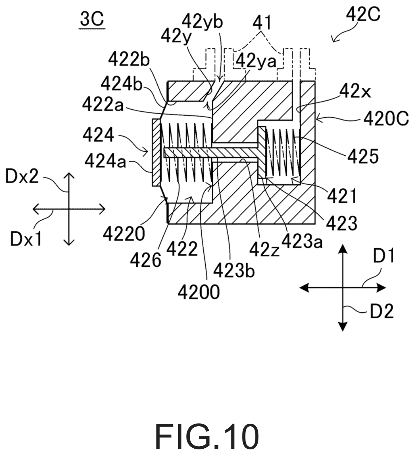

Next, an ink ejecting apparatus 3C according to a third modification that can be applied to the ink-jet recording apparatus 10 is described with reference to Fig. 10. The ink ejecting apparatus 3C is a modification of the ink ejecting apparatus 3A.

Structural elements illustrated in Fig. 10 that are the same as the structural elements illustrated in Figs. 4 and 5 are denoted by the same reference numerals as the structural elements illustrated in Figs. 4 and 5. A configuration of the ink ejecting apparatus 3C that is different from the configuration of the ink ejecting apparatus 3A is described below.

The ink ejecting apparatus 3C has a configuration in which the pressure-regulating-valve apparatus 42A of the ink ejecting apparatus 3A has been replaced with a pressure-regulating-valve apparatus 42C. The pressure-regulating-valve apparatus 42C has a configuration in which the body 420A of the pressure-regulating-valve apparatus 42A has been replaced with a body 420C.

In the body 420C, the outflow path entrance 42ya is formed in a portion of the surrounding surface 422b that is on the partition surface 422a in the secondary chamber 422. This configuration is the same as the configuration of the ink ejecting apparatus 3A.

In the pressure-regulating-valve apparatus 42C, the outflow path 42y is formed in parallel with a line extending obliquely with respect to the second direction Dx2. The ink ejecting apparatus 3C is different from the ink ejecting apparatus 3A in this point.

In Fig. 10, the pressure-regulating-valve apparatus 42C is arranged in a position in which the first direction Dx1 extends in parallel with the horizontal direction D1 and the second direction Dx2 extends in parallel with the vertical direction D2.

Note that the pressure-regulating-valve apparatus 42C may be arranged in a position in which the outflow path 42y extends in parallel with the vertical direction D2.

The adoption of the ink ejecting apparatus 3C also results in obtaining effects similar to the effects provided when the ink ejecting apparatus 3 is adopted.

It is to be understood that the embodiments herein are illustrative and not restrictive, since the scope of the disclosure is defined by the appended claims.

## Claims

1. A liquid ejecting apparatus (3), comprising:
a supply path (41) that is connected to a liquid storage (40) that stores therein liquid;
a liquid ejecting head (30) that is connected to the supply path (41), the liquid ejecting head (30) including a plurality of nozzles (31), the liquid ejecting head (30) being supplied with the liquid from the liquid storage (40) through the supply path (41), the liquid ejecting head (30) ejecting liquid drops from each of the plurality of nozzles (31); and
a pressure-regulating-valve apparatus (42) that is arranged in the supply path (41), the pressure-regulating-valve apparatus (42) temporarily switching from a certain state to another state according to a change in pressure caused in the supply path (41) due to the ink drops being ejected by the liquid ejecting head (30), the certain state being a state in which the supply path (41) is shut off, the other state being a state in which the shutoff of the supply path (41) is canceled, **characterized in that**
the pressure-regulating-valve apparatus (42) includes
an inflow path (42x) that is a flow path for the liquid incoming from upstream of the supply path (41),
a primary chamber (421) that communicates with the inflow path (42x),
an outflow path (42y) that is a flow path for the liquid going out to downstream of the supply path (41),
a secondary chamber (422) that communicates with the outflow path (42y), the secondary chamber including an opening (4220),
a partition (4200) in which a communication hole (42z) that communicates with the primary chamber (421) and with the secondary chamber (422) is formed, the partition (4200) separating the primary chamber (421) from the secondary chamber (422),
a cover member (424) that covers the opening (4220), the cover member including a diaphragm (424b) that contracts and expands according to a change in pressure in the secondary chamber (422), and
a valve (423) that opens and closes the communication hole (42z) according to the contraction and expansion of the diaphragm (424b), and
an outflow path entrance (42ya) corresponding to one of ends of the outflow path (42y) that enables the outflow path (42y) to communicate with the secondary chamber (422) is formed in a top portion of an inner surface of the secondary chamber (422).

2. The liquid ejecting apparatus (3) according to claim 1, wherein
the inner surface of the secondary chamber (422) includes
a partition surface (422a) that corresponds to a surface of the partition (4200) on the side of the secondary chamber (422), and
a surrounding surface (422b) that is formed between the opening (4220) and an edge of the partition surface (422a), the surrounding surface (422b) surrounding the secondary chamber (422), and
the outflow path entrance (42ya) is formed in a portion of the partition surface (422a) that is on the surrounding surface 422b), or in a portion of the surrounding surface (422b) that is on the partition surface (422a).

3. The liquid ejecting apparatus (3) according to claim 1 or 2, wherein
an outflow path exit (42yb) corresponding to one of the ends of the outflow path (42y) that enables the outflow path (42y) to communicate with the supply path (41) is formed in an outer upper surface of a body that includes the inflow path (42x), the outflow path (42y), the primary chamber (421), the secondary chamber (422), and the partition (4200).

4. An ink-jet recording apparatus (10), comprising
a sheet transportation apparatus (2) that transports a sheet, **characterized in that**
the ink-jet recording apparatus (10) further comprises the liquid ejecting apparatus (3) according to any one of claims 1 to 3, the liquid ejecting apparatus (3) ejecting ink drops onto the transported sheet to form an image on the sheet.
